# FASCICULE DE BREVET EUROPEEN

(11) **EP 3 921 690 B1**
(45) Date de publication et mention de la délivrance du brevet: **04.01.2023**
(21) Numéro de dépôt: 19832648.0
(22) Date de dépôt: 18.12.2019
(51) Int. Cl.: G02B 27/01

(54) **SYSTEME DE VISUALISATION DE CASQUE COMPORTANT UN DISPOSITIF D'ALIGNEMENT ET D'ESCAMOTAGE DU DISPOSITIF DE VISUALISATION**
HELMMONTIERTES ANZEIGESYSTEM MIT EINER VORRICHTUNG ZUM AUSRICHTEN UND EINZIEHEN DER ANZEIGEVORRICHTUNG
HELMET-MOUNTED DISPLAY SYSTEM COMPRISING A DEVICE FOR ALIGNING AND RETRACTING THE DISPLAY DEVICE

(30) Priorité: 07.02.2019 FR 1901163
(43) Date de publication de la demande: 15.12.2021
(73) Titulaire: THALES, 92400 Courbevoie (FR)
(72) Inventeur: BAUDOU, Joël, 33700 Merignac (FR); BALET, Mathieu, 33700 Merignac (FR); AYMERIC, Bruno, 33700 Merignac (FR)
(74) Mandataire: Atout PI Laplace
(86) Numéro de dépôt international: PCT/EP2019/086056
(87) Numéro de publication internationale: WO 2020/160826

(56) Documents cités:
- EP-A1- 0 671 646
- WO-A1-2010/045141
- WO-A1-2014/186682
- WO-A1-2016/174355
- GB-A- 2 062 285

## Description

Le domaine technique de l'invention est celui des systèmes de visualisation de casque pour pilotes d'avion ou d'hélicoptère. Il s'applique tout particulièrement, mais non exclusivement au domaine des dispositifs de visualisation à combineur à expansion de pupille.

Un système de visualisation comporte essentiellement un dispositif de visualisation et un dispositif de détection de position de casque.

La fonction du dispositif de visualisation est de fournir à l'utilisateur une image collimatée en superposition sur le paysage extérieur. La superposition est assurée par un élément optique appelé combineur. Celui-ci peut être à expansion de pupille.

Le dispositif de visualisation porté doit être aussi léger et aussi petit que possible pour ne pas dégrader le confort du pilote et faciliter son intégration sur la tête. Un moyen d'alléger l'optique est de réduire la zone dans laquelle la totalité de l'image est visible, connue sous le terme de « boite à oeil » ou « eye-box ». Généralement, la dimension minimale de la boite à œil est d'environ 10 millimètres par 10 millimètres afin d'intégrer le diamètre de la pupille, qui peut dépasser 5 millimètres par faible luminosité, et son déplacement lorsque l'utilisateur regarde les bords de l'image, typiquement le centre de la pupille décrit un arc de cercle de 5,2 millimètres pour une visée à 30°.

Cette dimension de boite à œil est insuffisante pour garantir que l'œil soit suffisamment bien centré dans celle-ci pour voir la totalité de l'image. En effet, la distance entre les deux yeux de l'utilisateur varie de 54 à 72 millimètres environ dans le plan horizontal et la hauteur pupille-vertex varie de 100 à 130 millimètres environ dans le plan vertical. A ces variations anthropométriques, il faut ajouter les variations de forme et de taille de casque, les défauts de positionnement initial du casque ou du dispositif de maintien sur la tête et son glissement possible en vol.

Pour pallier ces écarts entre la dimension de la boite à œil et les variations morphologiques, le dispositif de visualisation dispose généralement de réglages dans la direction verticale et dans la direction horizontale. Ces réglages peuvent être réalisé au moyen de glissières avec entrainement par vis moletée comme dans les dispositifs de vision nocturne ou simplement par glissement du plan de pose du dispositif de visualisation sur le plan recevant sur le casque, le maintien étant assuré, par exemple, par une vis de serrage au travers d'un trou avec un jeu correspondant à la course de réglage souhaité.

Le dispositif de détection de position a plusieurs utilités. Il permet de recaler l'image affichée par le dispositif de visualisation. Il permet d'asservir un certain nombre de systèmes embarqués sur l'aéronef, tels que certains capteurs d'imagerie ou certains systèmes d'arme. Par exemple, dans le cas d'applications de réalité augmentée, pour afficher une ligne d'horizon ou une piste d'atterrissage synthétique, il est nécessaire de superposer l'image synthétique à l'image réelle avec une grande précision.

Le dispositif de détection de posture est installé sur le casque et détermine la position du casque par rapport à l'aéronef et par rapport à la terre grâce à des références optiques, magnétiques ou inertielles intégrées au cockpit. Cette information est transmise à un calculateur qui modifie l'image présentée en fonction de la posture du casque et qui la transmet au dispositif d'affichage.

Pour obtenir la superposition de l'image synthétique, l'image doit être corrigée de la position relative entre la détection de posture et l'affichage et notamment prendre en compte la position réelle après réglage. La précision de superposition de l'image synthétique sur le monde extérieur, généralement situé à plusieurs dizaines des mètres, dépend pour une bonne partie de la précision de détermination des angles du dispositif d'affichage par rapport au dispositif de détection de posture.

Dans l'idéal, le dispositif d'affichage intègre également le dispositif de détection de position, ainsi la position relative est connue et déterminée à la fabrication et il n'y a pas de variation avec le réglage de la position de l'affichage devant l'œil. Par exemple, la plupart des lunettes de réalité augmentée mettent en œuvre une solution de ce type, peu encombrante mais également peu précise.

Mais, sur un casque, les encombrements du dispositif d'affichage et du dispositif de détection de posture ainsi que la disposition des références du cockpit ne permettent généralement pas d'associer ces deux dispositifs. Il est donc nécessaire de faire des réglages.

Le réglage vertical et horizontal du dispositif d'affichage par des glissières présente une masse et un encombrement important. Par exemple, les glissières du type de celles qui existent pour assurer les réglages des jumelles de vision de nuit ne sont pas assez précises, pas assez rigides et leur jeu est trop important.

La structure mécanique liant le dispositif d'affichage au dispositif de détection de posture est généralement en matière plastique ou en composite et est insuffisamment rigide pour assurer la précision de quelques milliradians requise pour l'alignement de l'image synthétique sur l'image réelle.

Il existe des micro-dispositifs électromécaniques utilisés comme capteurs d'angles qui peuvent être intégrés à chacun des dispositifs afin de déterminer leur position relative mais ils nécessitent un câblage et un traitement supplémentaire ainsi qu'une calibration régulière, ce qui augmente la complexité du système.

Par ailleurs, dans le cas d'un dispositif d'affichage à combineur ou à lame à expansion de pupille, le combineur ou le dispositif complet doit pouvoir se dégager du visage afin de pouvoir mettre et retirer le casque. Ce mécanisme supplémentaire ne doit pas grever la précision de superposition.

Pour résoudre ce problème d'ajustement et de précision, différentes solutions techniques ont été proposées. Le brevet US2012120482 intitulé « Modular day mode/night mode helmet-mounted display » présente un système de visualisation de casque qui ne présente pas les inconvénients précédents. Une vue en perspective de ce système réalisé selon le brevet US2012120482 est représentée sur la figure 1. La même vue est représentée en éclaté sur la figure 2 de façon à mieux voir certains éléments.

Ce système de visualisation est constitué d'un casque dont la visière est déposée et remplacée par une structure mécanique 1 en matériau composite recevant le dispositif de détection de posture 2 sur la gauche et le dispositif de visualisation 3 devant l'œil droit de l'utilisateur.

La liaison entre le dispositif d'affichage et la structure mécanique est constituée par un plan vertical 4 comportant une lumière oblongue d'axe vertical 5 traversée par une vis 6 qui comprime un ressort 7 assurant l'effort de frottement nécessaire au maintien en position du dispositif d'affichage. La vis 6 coulisse dans la lumière oblongue 5 pour l'alignement vertical du dispositif d'affichage 3 devant l'œil. Le dispositif d'affichage 3 pivote autour de l'axe de la vis 6 pour assurer son alignement latéral ou son dégagement.

Le recalage de l'image synthétique est réalisé en visant une référence harmonisée avec l'aéronef. Cette référence d'alignement est réalisée par une lunette comportant une mire collimatée, connue sous l'acronyme « BRU », signifiant « Boresight Reference Unit ».

Le recalage de l'image synthétique est alors réalisé par le pilote qui déplace l'image synthétique en vertical, en horizontal, et en rotation, jusqu'à obtenir la superposition de l'image synthétique sur la mire harmonisée.

L'alignement vertical et horizontal compense la déformation de la structure mécanique supportant le dispositif de visualisation et celui de détection de position montée sur le casque et les éventuelles déformations du casque mis en place sur la tête. L'alignement en rotation ou en roulis compense également les déformations de la structure mécanique et le calage en rotation du dispositif de visualisation centré horizontalement dans la boite à œil.

Cette opération est réalisée dans le mode de maintenance du dispositif de visualisation et doit être réalisée à chaque démarrage du système. De même, après chaque manipulation du dispositif de visualisation sur la tête, le pilote doit reprendre la rotation d'image car il n'y a pas de mécanisme de mémorisation de la position initiale.

Dans un autre mode d'alignement, la mire collimatée est remplacée par une caméra attachée à l'aéronef qui restitue une image vidéo du monde extérieur dans le dispositif de visualisation. La procédure d'alignement consiste alors à superposer l'image vidéo à l'image extérieure vue au travers du combineur. Ce principe a l'avantage de ne pas nécessiter l'opération d'harmonisation de la référence avec l'aéronef mais l'alignement en cours du vol est délicat et moins précis qu'au sol. Ce mode d'alignement nécessite donc une mémorisation de la position du réglage du dispositif d'affichage.

Le système de visualisation de casque selon l'invention ne présente pas les inconvénients précédents. Il comporte un dispositif d'alignement et d'escamotage du dispositif de visualisation suffisamment fiable et précis pour être remis en place sans nécessiter de recalage mécanique ou optique. De plus, ce dispositif mécanique est simple, léger et peu encombrant.

Plus précisément, l'invention concerne un système de visualisation de casque comportant une coque de casque et un arceau mécanique monté sur la partie frontale de ladite coque, l'arceau mécanique comportant :
un dispositif de détection de position fixe ;
un dispositif de visualisation ;
un moyen de maintien et de réglage dans le plan vertical du dispositif de visualisation, ledit moyen de maintien et de réglage étant constitué :
   d'un premier plan de pose vertical disposé dans la partie frontale de l'arceau et perpendiculaire au plan sagittal de la coque, ledit appui plan comportant une lumière oblongue ;
   d'un ensemble vis-ressort qui assure la fixation et le réglage du dispositif de visualisation sur l'appui plan, la vis traversant la lumière oblongue et étant fixée dans une structure mécanique du dispositif de visualisation, le dispositif de visualisation pouvant tourner avec frottement autour de l'axe de la vis de façon à le rendre escamotable ;
   caractérisé en ce que le système de visualisation comporte un moyen de réglage en roulis et de remise en place du dispositif de visualisation, ledit moyen de réglage et de remise en place étant constitué :
      d'un second plan de pose vertical, normal au premier plan de pose ;
      d'une vis moletée à extrémité sphérique attachée à la structure mécanique du dispositif de visualisation, l'axe de la vis moletée étant perpendiculaire à l'axe vis-ressort et dans un plan horizontal, l'extrémité de la vis reposant sur le second plan de pose en position d'utilisation du dispositif de visualisation.

Avantageusement, l'arceau mécanique comporte un système électrique de détection de contact de la vis moletée avec le second plan de pose.

Avantageusement, l'arceau mécanique comporte un système de verrouillage mécanique de la vis moletée sur le second plan de pose.

Avantageusement, l'arceau mécanique comporte un système de verrouillage par aimantation de la vis moletée sur le second plan de pose.

Avantageusement, le dispositif de visualisation comporte un combineur optique à expansion de pupille.

Avantageusement, le dispositif de détection de position est un dispositif optique à caméra.

Avantageusement, le dispositif de visualisation de casque comportant un afficheur, le système de visualisation de casque comporte un calculateur graphique comprenant une fonction de dimensionnement de la taille de l'image fonction de l'inclinaison du dispositif de visualisation lorsque celui-ci est en position d'utilisation.

Avantageusement, le système de visualisation comporte une visière mobile montée sur l'arceau mécanique, ladite visière couvrant en position basse le dispositif de visualisation et étant située sur le haut de la coque en position haute.

Avantageusement, l'arceau mécanique comporte des moyens de fixation d'un support de jumelles.

Les dessins annexés illustrent l'invention :

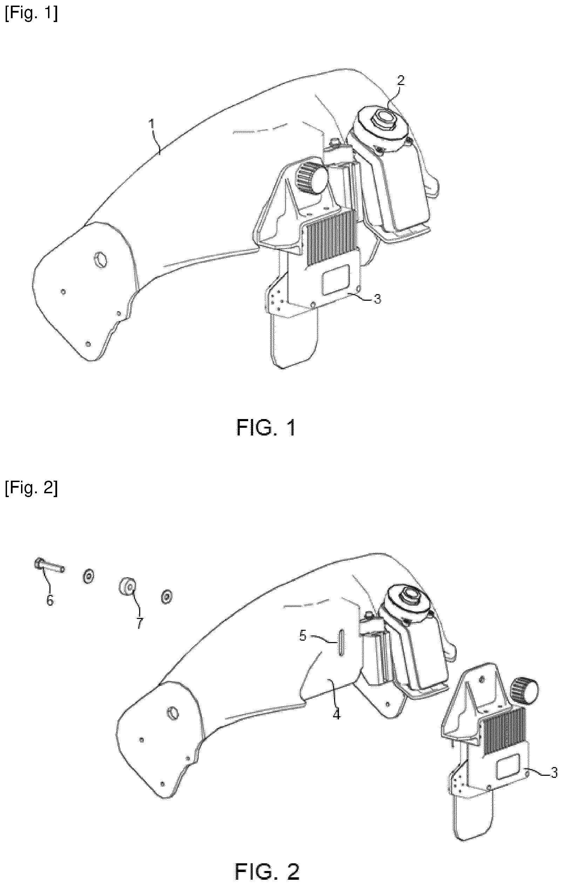

[Fig.1] représente une vue en perspective d'un système de visualisation de casque selon l'art antérieur ;
[Fig.2] représente une vue en perspective éclatée du système de visualisation de casque de la figure 1 ;
[Fig.3] représente une vue en perspective éclatée de face de l'arceau mécanique et du dispositif de visualisation associé selon l'invention ;
[Fig.4] représente une vue en perspective éclatée de dos de l'arceau mécanique et du dispositif de visualisation associé selon l'invention ;
[Fig.5] représente une vue de face de l'arceau mécanique et du dispositif de visualisation associé selon l'invention ;
[Fig.6] représente le principe de dimensionnement de l'image synthétique affichée dans le dispositif de visualisation ;
[Fig.7] représente une vue en perspective de face du système de visualisation selon l'invention monté sur casque, la visière étant baissée ;
[Fig.8] représente une vue en perspective de face du système de visualisation selon l'invention monté sur casque, la visière étant relevée, le dispositif de visualisation étant en position fonctionnelle ;
[Fig.9] représente une vue en perspective de face du système de visualisation selon l'invention monté sur casque, la visière étant relevée, le dispositif de visualisation étant en position escamotée.
Le système de visualisation selon l'invention comporte essentiellement une coque 15 de casque et un arceau mécanique 10 monté sur la partie frontale de cette coque 15.

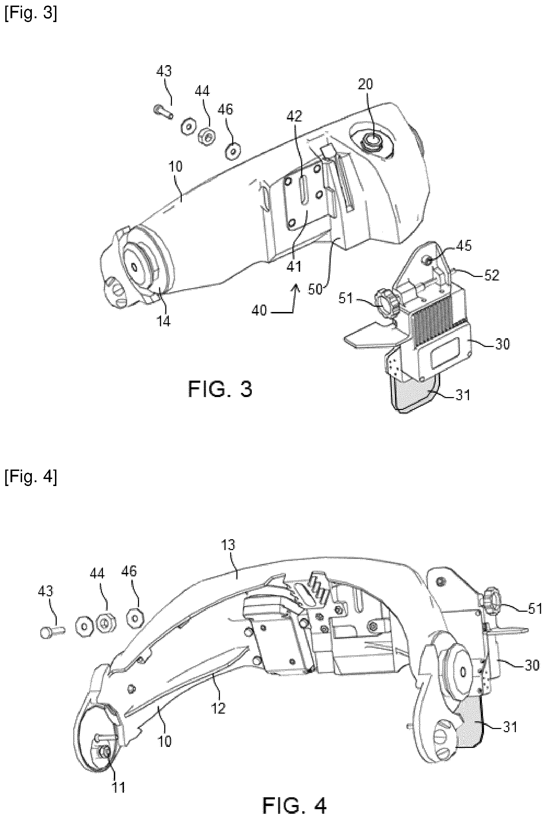

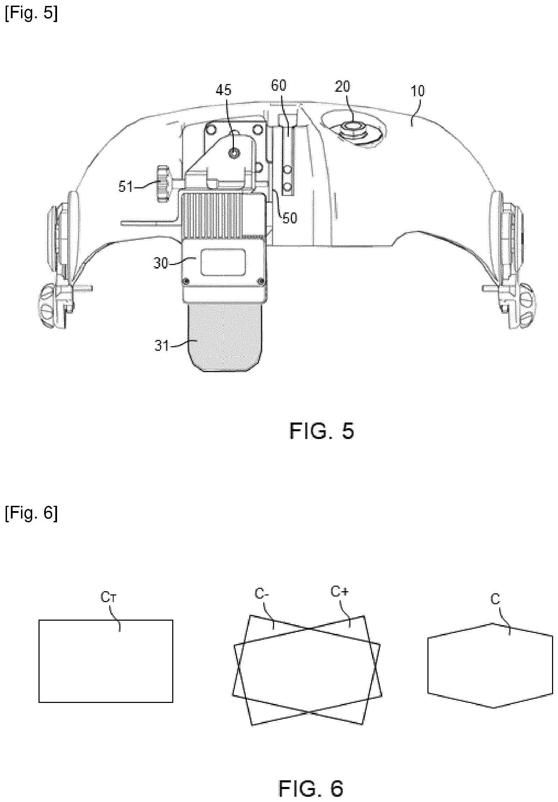

A titre d'exemple, les figures 3 et 4 représentent deux vues en perspective de cet arceau mécanique 10. La figure 5 représente une vue de face de ce même arceau. La forme générale de cet arceau 10 est un arc de cercle renforcé par des longerons 12 et une casquette supérieure 13.

Cet arceau comporte les éléments suivants :
- Des moyens de fixation 11 sur la coque du casque ;
- Des moyens de fixation et d'articulation 14 de la visière mobile 16 ;
- Un dispositif 20 de détection de position ;
- Un dispositif de visualisation 30 ;
- Un premier ensemble mécanique 40 de fixation et de réglage du dispositif de visualisation ;
- Un second ensemble mécanique de réglage et de remise en place du dispositif de visualisation ;
- Un moyen de fixation d'un support de jumelles 60 ;
- Une visière mobile 16.

Les deux moyens de fixation 11 sur la coque du casque sont situés aux deux extrémités de l'arceau comme on le voit, par exemple, sur la figure 4.

Les deux moyens de fixation et d'articulation 14 de la visière mobile 16 sont situés à quelques centimètres et au-dessus et en avant des moyens de fixation 11. La visière 16 est mobile en rotation autour de ses axes. La visière mobile a une double fonction de protection visuelle et mécanique.

Le dispositif de détection 20 de position a plusieurs utilités. Il permet de recaler l'image affichée par le dispositif de visualisation. Il permet d'asservir un certain nombre de systèmes embarqués sur l'aéronef, tels que certains capteurs d'imagerie ou certains systèmes d'arme.

A titre d'exemple, ce dispositif est une micro-caméra à grand champ et haute résolution qui détecte des mires spécifiques disposées à des emplacements connus du cockpit. La position et l'orientation de l'image de ces mires permet de déterminer la position et l'orientation de la caméra et, par conséquent du casque sur lequel la caméra est montée. Bien entendu, le système de visualisation selon l'invention n'est pas restreint à ce seul type de détection de position.

Il est essentiel que la liaison mécanique entre ce dispositif de détection est le dispositif de visualisation soit la plus rigide possible de façon que la position du casque déterminée par la caméra soit toujours représentative de la position du dispositif de visualisation.

L'arceau peut également comporter un moyen de fixation 60 d'un support de jumelles. Il est représenté en particulier sur les figures 3 et 5. Sur ces figures, ce moyen de fixation est une rainure en forme de T disposée dans la structure mécanique de l'arceau. D'autres dispositions sont possibles.

Le dispositif de visualisation comporte trois parties principales qui sont un dispositif d'affichage, une optique de collimation et un combineur optique. A titre d'exemple, le dispositif d'affichage comporte un écran plat avec sa source d'éclairage et sa carte électronique de pilotage. L'optique de projection assure la collimation de l'image diffusée. Le combineur superpose cette image sur le paysage extérieur. Il est généralement à expansion de pupille.

Un combineur à expansion de pupille est une lame optique mince à faces planes et parallèles dans laquelle est insérée une pluralité de lames semiréfléchissantes inclinées et parallèles entre elles. L'épaisseur du combineur est de quelques millimètres. Grâce à cette disposition, il est possible d'obtenir, dans un encombrement réduit, une pupille de dimensions suffisantes pour l'observation. La distance séparant le combineur de l'œil est de l'ordre de 25 millimètres.

Le premier ensemble mécanique 40 de fixation et de réglage du dispositif de visualisation a une triple fonction. Il permet de maintenir le dispositif de visualisation sur l'arceau mécanique. Il assure le réglage en translation verticale du dispositif de visualisation et il permet l'escamotage du dispositif de visualisation par rotation.

Il comprend un appui plan vertical 41 comportant une lumière oblongue 42 disposés dans la structure mécanique de l'arceau. Le plan vertical 41 est sensiblement parallèle au plan vertical passant par les deux yeux de l'utilisateur et est normal au plan sagittal. De cette manière, les déplacements du dispositif de visualisation n'entraînent qu'un seul décalage angulaire à compenser qui est le roulis de l'image synthétique.

Le dispositif de visualisation est maintenu en position par adhérence grâce à un ressort 44 comprimé par la vis 43 sur une surface interne parallèle au plan vertical 41 de la structure mécanique. Le dispositif de visualisation 30 est guidé précisément dans son déplacement dans la lumière oblongue 42, à la fois en translation et en rotation, grâce à un ajustement du bossage cylindrique 45 associé au dispositif de visualisation avec un faible jeu dans la lumière oblongue 42. Le jeu est, par exemple, du type H7g6 selon les normes ISO d'ajustement mécanique.

L'effort de friction est ajusté par le serrage de la vis 43 et la compression du ressort 44 de manière à ce que le déplacement du dispositif de visualisation 30 soit réalisable d'une seule main. Dans ce cas, le ressort 44 est constitué de rondelles coniques montées en série de manière à réduire l'encombrement et la masse du ressort 44. L'effort du ressort 44 sur la structure est réparti sur une large surface grâce à une rondelle 46 sur la face interne du plan vertical 41 et à l'appui du dispositif de visualisation sur la face externe de ce même plan vertical 41.

Le coefficient de frottement des matériaux de la structure mécanique et du dispositif d'affichage ainsi que les surfaces en contact permettent une oscillation du dispositif d'affichage autour de l'axe de son bossage 45 sans modifier le réglage vertical du dispositif de visualisation 30 lorsque le pilote actionne le dispositif de visualisation en le tenant par l'extrémité basse du combineur optique 31. Un décalage vertical inférieur à 1 millimètre lors de la rotation du dispositif de visualisation est tolérable car il n'entraîne pas de perte d'image, l'œil étant toujours dans la boite à œil, et ne modifie pas la position angulaire du dispositif de visualisation.

Le réglage en roulis réalisant le centrage horizontal ou latéral de la boite à œil du dispositif de visualisation devant l'œil du pilote, est ajusté à l'aide d'une vis moletée à pas fin 51 attachée au dispositif de visualisation 30 et en butée sur un plan vertical 50 normal au plan de pose 41 de la structure mécanique de l'arceau et parallèle à la lumière oblongue 42. L'extrémité 52 de la vis butée 51 est sphérique de manière à maitriser la zone de contact de la vis 51 sur le plan 50 lors de la rotation de celle-ci autour de son axe et autour du pivot 45 du dispositif de visualisation et éviter l'usure du plan vertical 50 par les bavures de filetage.

Le réglage vertical et le réglage latéral du dispositif de visualisation sont ainsi indépendants. La reprise du réglage vertical en vol ne modifie pas le réglage en roulis tant que la vis butée 51 est en contact avec le plan 50. De la même façon, le repositionnement du dispositif de visualisation après dégagement du visage est fidèle tant que cette vis butée 51 est en contact avec le plan 50.

La précision angulaire du calage en roulis dépend du jeu entre le bossage 45 et la lumière oblongue 42 et de la distance de la vis butée 51 par rapport au bossage 45. Le jeu donc être minimisé et la distance maximisée.

Le maintien de la vis butée 52 en contact contre le plan vertical 50 est donc fondamental. Dans un premier mode de réalisation, il est réalisé par frottement et adhérence entre le dispositif de visualisation et la structure mécanique de l'arceau au niveau du plan 50.

Dans un second mode de réalisation, ce contact peut être assuré par un dispositif mécanique complémentaire.

A titre de premier exemple, ce dispositif complémentaire peut être un verrouillage escamotable de la vis butée 52 sur le plan vertical. L'extrémité sphérique de la vis butée est verrouillée contre le plan vertical par un ressort flottant. Ce ressort est écarté par la forme sphérique de la vis lors du pivotement de dégagement du dispositif de visualisation.

A titre de second exemple, ce dispositif complémentaire est réalisé par un pivot 45 bistable. Le pivot est découplé du réglage de translation verticale et un ressort de torsion assure le contact de la vis butée contre le plan vertical. La position dégagée du dispositif de visualisation est assurée par un doigt de verrouillage escamotable.

Le ressort et le doigt de verrouillage peuvent être remplacés par des aimants situés sur le plan vertical 50 et sur la butée de position dégagée du dispositif de visualisation.

Il est également possible de disposer un moyen de vérification du contact entre la butée et son plan d'appui. Par exemple, la détection du contact peut être assurée par un signal électrique. La vis butée 51 et le plan vertical 50 sont alors des conducteurs électriques et un signal est transmis au système qui affiche l'information dans le dispositif de visualisation lorsque le contact est coupé et/ou établi.

La vis butée 51 est moletée et facilement accessible pour faciliter le réglage lorsque le dispositif de visualisation affiche une image synthétique pour aider au centrage de la boite à œil sur l'œil du pilote.

La hauteur entre le pivot réalisé par le bossage 45 et l'œil est aussi importante que possible afin de limiter l'amplitude de la correction d'image en roulis du dispositif de visualisation 30 qui est dépendante de l'écart inter pupillaire. Cette hauteur est limitée par la proximité avec la visière du casque et sa cinématique de relèvement.

Pendant les réglages, la faible amplitude de la rotation du dispositif de visualisation permet de conserver la plus grande partie possible du champ rectangulaire de l'image synthétique. En effet, l'image synthétique est composée de symboles liés au visuel dans le repère tête et de symboles ou d'image vidéo liés au monde extérieur dans le repère terrestre. Lors d'une forte inclinaison du dispositif de visualisation 30, la taille de l'image synthétique est redimensionnée afin que ses contours ne perturbent pas la perception et l'orientation de la tête. Ce point est illustré sur les trois schémas de la figure 6.

Le premier schéma, à gauche de la figure 6, représente le champ total C_{T} de l'afficheur du dispositif de visualisation. Le second schéma, au centre de la figure 6, représente les inclinaisons minimale et maximale de cet afficheur lorsque l'on incline le dispositif de visualisation au moyen de sa vis moletée vers la gauche ou vers la droite de façon à compenser les différences entre les écarts pupillaires des utilisateurs. On note ces champs C- et C+. Le champ utile C de l'image sur l'afficheur doit permettre d'afficher une image droite pour ces champs extrêmes. Il est donc au mieux égal à l'intersection des deux champs C- et C+. Il est représenté par un hexagone sur le schéma à droite de la figure 6.

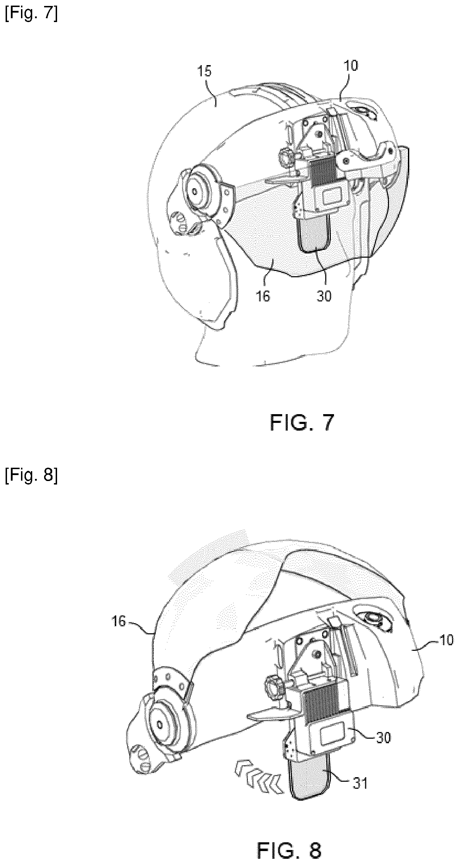

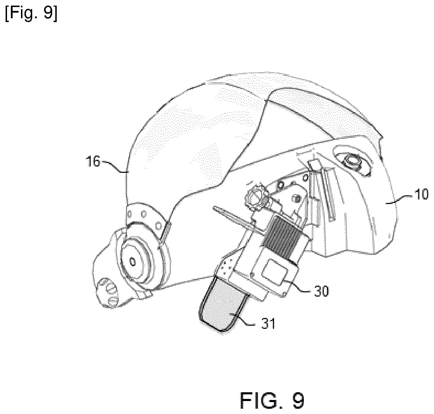

Les figures 7, 8 et 9 représentent respectivement :
- une première vue en perspective de face du système de visualisation selon l'invention monté sur casque, la visière étant baissée ;
- une seconde vue en perspective de face du système de visualisation monté sur casque, la visière étant relevée, le dispositif de visualisation étant en position fonctionnelle ;
- une troisième vue en perspective de face du système de visualisation selon l'invention monté sur casque, la visière étant relevée, le dispositif de visualisation étant en position escamotée.

Le système de visualisation selon l'invention présente de nombreux avantages. Il permet de conserver facilement le réglage latéral du dispositif de visualisation de manière à le repositionner dans sa position initiale avec l'œil centré dans la boite à œil grâce à l'ajout de la butée réglable.

La masse ajoutée au casque par les moyens de réglages supplémentaires est très faible et l'encombrement du dispositif de visualisation n'est pas sensiblement modifié.

La précision du dispositif est garantie par les ajustements du pivot dans la lumière oblongue, le parallélisme du plan de référence avec la lumière oblongue et la distance entre le pivot et la butée.

La vis butée moletée est facilement accessible pour assurer le réglage lorsque le dispositif de visualisation affiche une image synthétique pour aider au centrage de la boite à œil sur l'œil du pilote.

## Revendications

1. Système de visualisation de casque comportant une coque (15) de casque et un arceau mécanique (10) monté sur la partie frontale de ladite coque, l'arceau mécanique comportant :
un dispositif de détection de position (20) fixe ;
un dispositif de visualisation (30) ;
un moyen (40) de maintien et de réglage dans le plan vertical du dispositif de visualisation, ledit moyen de maintien et de réglage étant constitué :
d'un premier plan de pose (41) vertical disposé dans la partie frontale de l'arceau et perpendiculaire au plan sagittal de la coque, ledit appui plan comportant une lumière oblongue (42) ;
d'un ensemble vis (43) - ressort (44) qui assure la fixation et le réglage du dispositif de visualisation sur l'appui plan, la vis traversant la lumière oblongue et étant fixée dans une structure mécanique du dispositif de visualisation, le dispositif de visualisation pouvant tourner avec frottement autour de l'axe (45) de la vis de façon à le rendre escamotable ;
**caractérisé en ce que** le système de visualisation comporte un moyen de réglage en roulis et de remise en place du dispositif de visualisation, ledit moyen de réglage et de remise en place étant constitué :
d'un second plan de pose vertical (50), normal au premier plan de pose ;
d'une vis moletée (51) à extrémité sphérique (52) attachée à la structure mécanique du dispositif de visualisation, l'axe de la vis moletée étant perpendiculaire à l'axe vis-ressort et dans un plan horizontal, l'extrémité de la vis reposant sur le second plan de pose en position d'utilisation du dispositif de visualisation.

2. Système de visualisation de casque selon la revendication 1, **caractérisé en ce que** l'arceau mécanique comporte un système électrique de détection de contact de la vis moletée avec le second plan de pose.

3. Système de visualisation de casque selon la revendication 1, **caractérisé en ce que** l'arceau mécanique comporte un système de verrouillage mécanique de la vis moletée sur le second plan de pose.

4. Système de visualisation de casque selon la revendication 1, **caractérisé en ce que** l'arceau mécanique comporte un système de verrouillage par aimantation de la vis moletée sur le second plan de pose.

5. Système de visualisation de casque selon l'une des revendications précédentes, **caractérisé en ce que** le dispositif de visualisation (30) comporte un combineur optique (31) à expansion de pupille.

6. Système de visualisation de casque selon l'une des revendications précédentes, **caractérisé en ce que** le dispositif de détection de position (20) est un dispositif optique à caméra.

7. Système de visualisation de casque selon l'une des revendications précédentes, **caractérisé en ce que** le dispositif de visualisation de casque comportant un afficheur, le système de visualisation de casque comporte un calculateur graphique comprenant une fonction de dimensionnement de la taille de l'image fonction de l'inclinaison du dispositif de visualisation lorsque celui-ci est en position d'utilisation.

8. Système de visualisation de casque selon l'une des revendications précédentes, **caractérisé en ce que** le système de visualisation comporte une visière mobile (16) montée sur l'arceau mécanique, ladite visière couvrant en position basse le dispositif de visualisation et étant située sur le haut de la coque en position haute.

9. Système de visualisation de casque selon l'une des revendications précédentes, **caractérisé en ce que** l'arceau mécanique comporte des moyens (60) de fixation d'un support de jumelles.

## Patentansprüche

1. Anzeigesystem an einem Helm, umfassend eine Helmschale (15) und einen mechanischen Bügel (10), der auf dem Vorderteil der Schale montiert ist, wobei der mechanische Bügel Folgendes umfasst:
eine feststehende Positionserkennungsvorrichtung (20);
eine Anzeigevorrichtung (30);
ein Halte- und Verstellmittel (40) in der vertikalen Ebene der Anzeigevorrichtung, wobei das Halte- und Verstellmittel aus Folgendem besteht:
einer ersten vertikalen Auflagefläche (41), die in dem vorderen Teil des Bügels angeordnet und senkrecht zu der Sagittalebene der Schale ist, wobei die flache Unterlage einen Langschlitz (42) umfasst;
einer Einheit aus Schraube (43) und Feder (44), die die Befestigung und Einstellung der Anzeigevorrichtung auf der flachen Unterlage gewährleistet, wobei die Schraube den Langschlitz durchquert und in einer mechanischen Struktur der Anzeigevorrichtung befestigt ist, wobei sich die Anzeigevorrichtung derart mit Reibung um die Achse (45) der Schraube drehen kann, dass diese versenkbar wird;
**dadurch gekennzeichnet, dass** das Anzeigesystem ein rollendes Einstellmittel zum Zurückführen der Anzeigevorrichtung umfasst, wobei das Einstell- und Rückführmittel aus Folgendem besteht:
einer zweiten vertikalen Auflagefläche (50), die zur ersten Auflagefläche normal ist;
einer Rändelschraube (51) mit einem kugelförmigen Ende (52), die an der mechanischen Struktur der Anzeigevorrichtung angebracht ist, wobei die Achse der Rändelschraube senkrecht zur Achse der Schraube-Feder-Einheit steht und in einer horizontalen Ebene liegt, wobei das Ende der Schraube in einer Verwendungsposition der Anzeigevorrichtung auf der zweiten Auflagefläche ruht.

2. Anzeigesystem an einem Helm nach Anspruch 1, **dadurch gekennzeichnet, dass** der mechanische Bügel ein elektrisches Erkennungssystem für einen Kontakt zwischen der Rändelschraube und der zweiten Auflagefläche umfasst.

3. Anzeigesystem an einem Helm nach Anspruch 1, **dadurch gekennzeichnet, dass** der mechanische Bügel ein mechanisches System zum Verriegeln der Rändelschraube auf der zweiten Auflagefläche umfasst.

4. Anzeigesystem an einem Helm nach Anspruch 1, **dadurch gekennzeichnet, dass** der mechanische Bügel ein System zum Verriegeln der Rändelschraube auf der zweiten Auflagefläche durch Magnetisierung umfasst.

5. Anzeigesystem an einem Helm nach einem der vorhergehenden Ansprüche, **dadurch gekennzeichnet, dass** die Anzeigevorrichtung (30) einen optischen Steuerschalter (31) mit Pupillenerweiterung umfasst.

6. Anzeigesystem an einem Helm nach einem der vorhergehenden Ansprüche, **dadurch gekennzeichnet, dass** die Positionserkennungsvorrichtung (20) eine optische Vorrichtung mit Kamera ist.

7. Anzeigesystem an einem Helm nach einem der vorhergehenden Ansprüche, **dadurch gekennzeichnet, dass** die Anzeigevorrichtung an einem Helm eine Anzeigeeinrichtung umfasst, das Anzeigesystem an einem Helm einen grafischen Rechner aufweist, der eine Dimensionierungsfunktion für die Größe des Bildes als Funktion der Neigung der Anzeigevorrichtung, wenn sich diese in der Verwendungsposition befindet, umfasst.

8. Anzeigesystem an einem Helm nach einem der vorhergehenden Ansprüche, **dadurch gekennzeichnet, dass** das Anzeigesystem eine bewegliche Augenblende (16) umfasst, die auf dem mechanischen Bügel montiert ist, wobei die Augenblende in der tiefen Position die Anzeigevorrichtung bedeckt und sich in der hohen Position oben auf der Schale befindet.

9. Anzeigesystem an einem Helm nach einem der vorhergehenden Ansprüche, **dadurch gekennzeichnet, dass** der mechanische Bügel Mittel (60) zum Befestigen eines Fernglasträgers umfasst.

## Claims

1. A helmet-mounted display system comprising a helmet shell (15) and a mechanical arch (10) mounted on the front part of said shell, the mechanical arch comprising:
a fixed position detection device (20);
a display device (30);
a means (40) for holding and adjusting the display device in the vertical plane, said holding and adjustment means consisting:
of a first vertical support surface (41) disposed in the front part of the arch and at right angles to the sagittal plane of the shell, said flat support comprising an oblong port (42);
of a screw (43) - spring (44) assembly which ensures the fixing and the adjustment of the display device on the flat support, the screw passing through the oblong port and being fixed in a mechanical structure of the display device, the display device being able to rotate with friction about the axis (45) of the screw so as to make it retractable;
**characterised in that** the display system comprises a means for roll adjustment and repositioning of the display device, said adjustment and repositioning means consisting:
of a second vertical support surface (50), normal to the first support surface;
of a knurled screw (51) with spherical end (52) attached to the mechanical structure of the display device, the axis of the knurled screw being at right angles to the screw-spring axis and in a horizontal plane, the end of the screw resting on the second support surface when the display device is in its position of use.

2. The helmet-mounted display system according to claim 1, **characterised in that** the mechanical arch comprises an electrical system for detecting contact of the knurled screw with the second support surface.

3. The helmet-mounted display system according to claim 1, **characterised in that** the mechanical arch comprises a mechanical system for locking the knurled screw on the second support surface.

4. The helmet-mounted display system according to claim 1, **characterised in that** the mechanical arch comprises a magnetization-based system for locking the knurled screw on the second support surface.

5. The helmet-mounted display system according to one of the preceding claims, **characterised in that** the display device (30) comprises an optical combiner (31) with pupil expansion.

6. The helmet-mounted display system according to one of the preceding claims, **characterised in that** the position detection device (20) is a camera optical device.

7. The helmet-mounted display system according to one of the preceding claims, **characterised in that**, the helmet-mounted display device comprising a display, the helmet-mounted display system comprises a graphic computer comprising a function for dimensioning the size of the image as a function of the inclination of the display device when the latter is in its position of use.

8. The helmet-mounted display system according to one of the preceding claims, **characterised in that** the display system comprises a movable visor (16) mounted on the mechanical arch, said visor covering the display device in lowered position and being situated on the top of the shell in raised position.

9. The helmet-mounted display system according to one of the preceding claims, **characterised in that** the mechanical arch comprises fixing means (60) for a binocular support.
